# EUROPÄISCHE PATENTSCHRIFT

(11) **EP 3 932 522 B1**
(45) Veröffentlichungstag und Bekanntmachung des Hinweises auf die Patenterteilung: **11.10.2023**
(21) Anmeldenummer: 20020304.0
(22) Anmeldetag: 29.06.2020
(51) Int. Cl.: B01D 53/14, C10K 1/00, C10K 1/16

(54) **VERFAHREN UND ANLAGE ZUR ENTFERNUNG VON STÖRKOMPONENTEN AUS ROHSYNTHESEGAS**
PROCESS AND PLANT FOR REMOVING INTERFERING COMPONENTS FROM CRUDE SYNTHESIS GAS
PROCÉDÉ ET INSTALLATION D'ÉLIMINATION DE COMPOSANTS D'INTERFÉRENCE DU GAZ DE SYNTHÈSE BRUT

(43) Veröffentlichungstag der Anmeldung: 05.01.2022
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Schmidt, Sophia, 60439 Frankfurt (DE); Szabo, Robert, 60439 Frankfurt (DE)
(74) Vertreter: Dropsch, Holger

(56) Entgegenhaltungen:
- EP-A1- 3 583 994
- WO-A1-2017/196620
- DE-A1-102009 015 368

## Beschreibung

### Gebiet der Erfindung

Die Erfindung betrifft ein Verfahren und eine Anlage zum Reinigen eines Wasserstoff und Kohlenmonoxid als Zielkomponenten und Kohlendioxid und Schwefelkomponenten als Störkomponenten enthaltenden Rohsynthesegases durch Gaswäsche mit einem physikalisch wirkenden, flüssigen, für Kohlendioxid und Schwefelkomponenten selektiven Waschmittel.

### Stand der Technik

Verfahren zur Abtrennung von unerwünschten Begleitstoffen aus technischen Rohgasen mittels physikalischer oder chemischer Absorption oder Gaswäsche sind aus dem Stand der Technik wohlbekannt. So können mit solchen Verfahren unerwünschte, acide Bestandteile aus durch Vergasung oder Reformierung von kohlenstoffhaltigen Einsatzstoffen erzeugten Rohsynthesegasen, beispielsweise Kohlendioxid (CO₂) und Schwefelwasserstoff (H₂S), aber auch weitere Bestandteile wie Carbonylsulfid (COS) und Cyanwasserstoff (HCN), von den erwünschten Synthesegasbestandteilen, also den Zielkomponenten Wasserstoff (H₂) und Kohlenmonoxid (CO) sicher bis in den Spurenbereich entfernt werden. Ein bekanntes und häufig angewendetes Verfahren ist das Rectisol-Verfahren, das in Ullmann's Encyclopedia of Industrial Chemistry, 6. Aufl. Bd. 15, S. 399 ff. grundsätzlich beschrieben wird. Im Rectisol-Verfahren erfolgt die Aufnahme der oben erwähnten, unerwünschten Störkomponenten durch kaltes, d. h. signifikant unter Umgebungstemperatur abgekühltes Methanol als Absorbens oder Waschmittel, wobei in einer Absorberkolonne, auch als Waschkolonne bezeichnet, ein intensiver Stoffaustausch zwischen dem Rohgas und dem Absorptionsmittel bzw. Waschmittel erfolgt. Dabei erhöht sich die Löslichkeit der unerwünschten Gasbestandteile drastisch mit sinkender Temperatur des Methanols und zunehmendem Druck, während sie für Wasserstoff und Kohlenmonoxid praktisch konstant bleibt. Methanol hat zudem den Vorteil, selbst bei Temperaturen bis hinab zu -75 °C noch eine geringe Viskosität und somit gute Stoff- und Wärmeübertragungseigenschaften aufzuweisen.

Das als Waschmittel verwendete, mit den Störkomponenten beladene Methanol wird im Rectisol-Verfahren über Regenerierungsvorrichtungen im Kreis gefahren. In den Regenerierungsvorrichtungen wird das beladene Methanol von den absorbierten Gasen auf physikalischem Wege befreit. Dabei wird in einem ersten Regenerierungsschritt CO₂ durch Druckentspannung (sogenannte Flashregenerierung) und/oder Strippen mit einem Gas, beispielsweise Stickstoff, aus dem beladenen Methanol-Waschmittel entfernt. In einem weiteren oder alternativen Regenerierungsschritt werden die schwefelhaltigen Gase, COS und H₂S, durch Erhitzen abgetrieben (sogenannte Heissregenerierung). Häufig wird angestrebt, ein möglichst CO₂-freies COS/H₂S-Gas zu erzeugen, da dessen wirtschaftlich interessante Weiterverarbeitung durch eine Vermischung mit CO₂ beeinträchtigt wird.

Beim Rectisol-Verfahren wird zwischen dem Standardverfahren und dem selektiven Rectisol-Verfahren unterschieden. Bei dem Standard-Rectisol-Verfahren werden die Begleitgase COS/H₂S und das CO₂ gemeinsam in einem Absorptionsschritt aus dem Rohsynthesegas abgetrennt. Dagegen werden bei dem sogenannten selektiven Rectisol-Verfahren die schwefelhaltigen Begleitgase COS/H₂S und das CO₂ jeweils in separaten, nacheinander ablaufenden Absorptionsschritten aus dem Rohsynthesegas abgetrennt. Diese selektive Absorption wird durch eine geeignete Einstellung der Verfahrensparameter, insbesondere des Mengenverhältnisses von Waschmittel und zu absorbierendem Gas, ermöglicht. Der Vorteil der selektiven Absorption liegt darin, dass das COS/H₂S- und das CO₂-Gas schon bei der Absorption zum größten Teil getrennt gehalten werden und nur der kleinere Teil bei der Regenerierung des Methanols getrennt werden muss. Auf diese Weise wird zudem die Gewinnung des enthaltenen Schwefels mit Hilfe von nachgeschalteten Verfahren wie beispielsweise dem Claus-Verfahren ermöglicht.

Die Flashregenerierung des mit aciden Gasbestandteilen beladenen Waschmittels kann mehrstufig erfolgen, wobei bei der Entspannung mechanische Arbeit und Kälte gewonnen werden können. So wird in der US-Patentschrift US 5067 972 vorgeschlagen, bei einem Verfahren zur Abtrennung acider Bestandteile wie CO₂, H₂S und COS aus einem Gasstrom diesen mittels eines physikalischen Waschmittels zu behandeln. Das mit den aciden Gasbestandteilen beladene Waschmittel wird einer Kaskade von Flashbehältern mit stufenweise sinkendem Druck zugeführt und die dabei freiwerdenden Flashgase zwischen jeweils zwei Stufen einer mehrstufigen Entspannungsturbine zugeführt. Hierdurch werden mechanische Arbeit und Prozesskälte gewonnen.

Weitere Verfahren mit Flashregenerierung sind in der EP3583994, WO2017196620 und der DE102009015368 offenbart.

Um insbesondere die Desorption von CO₂ aus dem beladenen Waschmittel bzw. Absorbens möglichst vollständig durchzuführen, ist es üblich, das mittels Flashregenerierung bereits teilregenerierte Waschmittel einer stromabwärts der Flashregenerierungsstufen angeordneten Strippkolonne aufzugeben, in deren unterem Teil ein Strippgas, beispielsweise Stickstoff, eingeleitet und mit dem Waschmittel in Kontakt gebracht wird. Hierdurch wird der Stoffaustausch zwischen Gasphase und Flüssigphase intensiviert und weitere Anteile an CO₂ aus dem Waschmittel desorbiert. Dabei kommt es allerdings auch in unerwünschter Weise zur Desorption von im Waschmittel gebundenen Schwefelkomponenten, beispielsweise von H₂S. Dieselbe Erscheinung kann auch auftreten, falls ein eigene Flashregenerierungsvorrichtung zur CO₂-Abreicherung von mit Schwefelkomponenten beladenem Waschmittel vorhanden ist. Um das unerwünschte Ausflashen von Schwefelkomponenten zu verhindern bzw. rückgängig zu machen, ist der obere Teil der Strippkolonne als Reabsorber ausgestaltet, in dem H₂S mittels einer kleinen Menge frischen, regenerierten oder teilregenerierten Waschmittels aus den ausgestrippten Gasen ausgewaschen und somit reabsorbiert wird. Die auf diese Weise ausgestaltete Strippkolonne wird daher auch als Reabsorberkolonne bezeichnet. Auch bei Vorhandensein einer eigenen Flashregenerierungsvorrichtung zur CO₂-Abreicherung von mit Schwefelkomponenten beladenem Waschmittel können unbeabsichtigt ausgeflashte Schwefelkomponenten auf analoge Weise reabsorbiert werden, entweder durch Vorsehen einer eigenen Reabsorptionszone oder durch Einleiten des Gasstroms mit den ausgeflashte Schwefelkomponenten in die gemeinsame Reabsorberkolonne.

Trotz der Nutzung der Flashgase zur Gewinnung von Prozesskälte bildet deren Erzeugung weiterhin einen wichtigen Faktor für den Energiebedarf des Waschverfahrens. Wünschenswert wäre daher eine energetische Optimierung durch eine verbesserte Gewinnung oder Rückgewinnung von Prozesskälte.

### Beschreibung der Erfindung

Aufgabe der Erfindung ist es daher, ein Waschverfahren bzw. Reinigungsverfahren und eine dafür geeignete Anlage anzugeben, das eine energetische Optimierung durch eine verbesserte Gewinnung oder Rückgewinnung von Prozesskälte bietet.

Diese Aufgabe wird in einem ersten Aspekt der Erfindung im Wesentlichen durch ein Verfahren mit den Merkmalen des Anspruchs 1 und durch eine Anlage mit den Merkmalen des Anspruch 9 gelöst. Weitere Ausgestaltungen gemäß weiterer Aspekte des erfindungsgemäßen Verfahrens und der erfindungsgemäßen Anlage finden sich in den Unteransprüchen der jeweiligen Kategorie.

Unter Waschmittel, synonym Absorptionsmittel oder Lösungsmittel, werden im Rahmen der vorliegenden Erfindung Stoffe oder Stoffgemische verstanden, die unter Verfahrensbedingungen als Flüssigkeit vorliegen, eine Absorptionskapazität für die aus dem Gas abzuscheidenden Komponenten aufweisen und mittels physikalischer Methoden, beispielsweise durch Flashen oder mittels Heissregenerierung, regeneriert werden können.

Unter Schwefelkomponenten werden im Zusammenhang mit der vorliegenden Erfindung anorganische und organische, Schwefel enthaltende Komponenten verstanden, insbesondere Schwefelwasserstoff H₂S, Carbonylsulfid COS, Kohlenstoffdisufid (Schwefelkohlenstoff) CS₂ und Mercaptane RSH, wobei R für einen organischen Rest steht. Mercaptane, deren Rest R fünf oder mehr Kohlenstoffatome enthält, werden als schwere Mercaptane bezeichnet. Mercaptane, deren Rest R vier oder weniger Kohlenstoffatome enthält, werden dagegen als leichte Mercaptane bezeichnet.

Unter einem physikalisch wirkenden, für Schwefelkomponenten und/oder Kohlendioxid selektiven Waschmittel wird ein flüssiger Stoff oder ein flüssiges Stoffgemisch verstanden, dessen Lösungsvermögen für Schwefelkomponenten, ausgedrückt durch die jeweilige Henry-Konstante, unter gegebenen Verfahrensbedingungen, insbesondere Druck und Temperatur, höher ist als für vergleichbar strukturierte und/oder vergleichbar schwere, schwefelfreie Komponenten. Das Waschvermögen beruht auf der Absorption der entsprechenden Komponenten durch Aufnahme und Verteilung innerhalb der Volumenphase des Waschmittels, nicht dagegen auf der Ausbildung chemischer Bindungen zwischen Waschmittel und abzutrennender Komponente. Demzufolge sind physikalisch wirkende Waschmittel durch Druckerniedrigung und/oder Temperaturerhöhung in der Regel regenerierbar, wobei die zuvor absorbierten Komponenten in chemisch unveränderter Weise wiedergewonnen werden.

Absorptionsvorrichtungen sind häufig als Absorptionskolonnen ausgestaltet. Eine Absorptionskolonne, alternative Bezeichnungen z. B. Gaswäscher, Waschkolonne oder Scrubber, ist ein verfahrenstechnischer Apparat, in dem ein Gasstrom mit einem Flüssigkeitsstrom intensiv in Kontakt gebracht wird, um Bestandteile des Gasstroms in der Flüssigkeit aufzunehmen. Seine Auslegung zielt darauf ab, für einen möglichst guten Stoffübergang zwischen der Gas- und Flüssigphase eine möglichst große Flüssigkeitsoberfläche zu erzeugen. Dies kann durch das Erzeugen von Blasen oder Tropfen oder durch das Berieseln von festen Oberflächen erfolgen. Daher werden zumeist oberflächenvergrößernde Einbauten wie Böden, beispielsweise Siebböden oder Glockenböden, oder strukturierte Packungen vorgesehen; alternativ können Sektionen der Absorptionskolonne mit Füllkörpern wie beispielsweise Kugeln, Zylindern, Ringen oder Sätteln gefüllt sein. Konstruktiv sind Absorptionskolonnen zumeist als stehende Rohre ggf. durch Kombination von Rohrschüssen ausgestaltet, die sich entlang einer parallel zur Vertikalen verlaufenden Längsachse erstrecken und die einen Innenraum der Absorptionskolonne umschließen.

Unterschiedliche Absorptionszonen in einer Absorptionsvorrichtung sind häufig konstruktiv voneinander getrennt. So können in einer Absorptionskolonne, die mehrere Absorptionszonen umfasst, diese durch Trennböden voneinander getrennt oder abgegrenzt werden. Unter einem Trennboden werden dabei Einbauten von Absorptionskolonnen, insbesondere speziell ausgestaltete Kolonnenböden verstanden, die es ermöglichen, dass in der Kolonne aufsteigende Dampf- oder Gasströme durch den Trennboden hindurchtreten können, während er für in der Kolonne abfließende bzw. absteigende Flüssigkeitsströme undurchlässig ist, so dass sich diese auf dem Trennboden ansammeln und über einen separaten Auslass (Seitenabzug) abgezogen und somit aus der Kolonne ausgeleitet werden. Der Trennboden wird daher auch als Abzugsboden oder Sammelboden bezeichnet. Er bildet gewissermaßen einen zweiten Kolonnensumpf zwischen dem oberen und dem unteren Ende der Kolonne. Eine bekannte Ausgestaltung eines Trennbodens ist diejenige als Kaminboden.

Als Heißregenerierungsvorrichtung, insbesondere als Heißregenerierungskolonne wird ein verfahrenstechnischer Apparat verstanden, der in konstruktiver Hinsicht einer Absorptionskolonne ähnelt, aber dessen Aufgabe es ist, mit Gaskomponenten beladenes Absorbens bzw. Waschmittel durch Zufuhr von Wärme möglichst weitgehend von diesen durch Desorption zu befreien und somit das Waschmittel zu regenerieren. Technisch wird dies beispielsweise dadurch erreicht, dass die Heißregenerierungskolonne mit einem Aufkocher zum Erhitzen des Kolonnensumpfs ausgestattet wird, wodurch Waschmittel-Eigendampf erzeugt wird, der als Austriebs-, Desorptions- bzw. Strippmittel dient und somit die Desorption der Gaskomponenten vorantreibt.

Unter einem Anreichern oder Abreichern einer Komponente in einem Gemisch, einer Fraktion oder einem Stoffstrom ist eine Maßnahme, Arbeitsschritt oder Verfahrensschritt zu verstehen, der dazu führt, dass sich der Stoffmengenanteil (Molenbruch) oder Massenanteil (Massenbruch) dieser Komponente erhöht (Anreichern) oder erniedrigt (Abreichern).

Unter dem überwiegenden Teil einer Fraktion, eines Stoffstroms etc. ist ein Anteil zu verstehen, der mengenmäßig größer ist als alle anderen jeweils für sich betrachteten Anteile. Insbesondere bei binären Gemischen oder bei der Auftrennung einer Fraktion in zwei Teile ist darunter ein Anteil von mehr als 50 Gew.-% zu verstehen, sofern im konkreten Fall nichts anderes angegeben ist.

Unter der Angabe, dass ein Stoffstrom überwiegend aus einer Komponente oder Komponentengruppe besteht, ist zu verstehen, dass der Stoffmengenanteil (Molenbruch) oder Massenanteil (Massenbruch) dieser Komponente oder Komponentengruppe mengenmäßig größer ist als alle anderen jeweils für sich betrachteten Anteile anderer Komponenten oder Komponentengruppen in dem Stoffstrom. Insbesondere bei binären Gemischen ist darunter ein Anteil von mehr als 50 % zu verstehen. Sofern im konkreten Fall nichts anderes angegeben ist, wird hierbei der Massenanteil (Massenbruch) zugrunde gelegt.

Unter einem Aufteilen oder Auftrennen bzw. Abtrennen eines Stoffstroms ist im Zusammenhang mit der vorliegenden Erfindung die Erzeugung mindestens zweier Teilströme aus dem ursprünglichen Stoffstrom zu verstehen, wobei mit dem Auftrennen bzw. Abtrennen eine beabsichtigte Änderung der stofflichen Zusammensetzung der erhaltenen Teilströme in Bezug auf den ursprünglichen Stoffstrom verbunden ist, beispielsweise durch Anwendung eines thermischen Trennverfahrens auf den ursprünglichen Stoffstrom. Dagegen ist mit dem Aufteilen des ursprünglichen Stoffstroms in der Regel keine Änderung der stofflichen Zusammensetzung der erhaltenen Teilströme verbunden.

Unter Flashen oder Flashregenerieren wird eine rasche, bevorzugt schlagartige Druckentspannung einer Flüssigkeit, beispielsweise eines mit Störkomponenten beladenen Adsorbens oder Waschmittels verstanden, die bevorzugt beim Eintreten in einen Behälter über einen Durchflussbegrenzer, beispielsweise ein Ventil, erfolgt. Die dabei freigesetzten Gase werden als Flashgase bezeichnet. In der Praxis werden Flashregenerierungsvorrichtungen häufig mehrstufig als Kaskade mehrerer hintereinandergeschalteter und beispielsweise mit integriertem oder separatem Flüssigkeitsabscheider ausgestaltet, in denen der Druck schrittweise abnimmt. Zudem werden häufig die mit unterschiedlichen Störkomponenten beladenen Waschmittel in separaten Flashregenerierungsvorrichtungen behandelt, beispielsweise in einer Flashregenerierungsvorrichtung für nur mit Kohlendioxid beladenes Waschmittel (nachfolgend zweite Flashregenerierungsvorrichtung) und einer separaten Flashregenerierungsvorrichtung für mit Kohlendioxid und zusätzlich mit Schwefelkomponenten beladenes Waschmittel (nachfolgend erste Flashregenerierungsvorrichtung). Die Betriebsbedingungen solcher Flashregenerierungsvorrichtungen sind dem Fachmann bekannt sind oder können im spezifischen Anwendungsfall durch Routineversuche oder fachmännische Berechnungen (z. B. durch Prozesssimulation) bestimmt werden.

Die Angabe, dass ein Rohsynthesegasstrom in einer Absorptionsvorrichtung zuerst mindestens eine Schwefelkomponenten-Absorptionszone und nachfolgend mindestens eine Kohlendioxid-Absorptionszone durchläuft, schließt nicht aus, dass zuvor eine weitere, der Schwefelkomponenten-Absorptionszone vorgeschaltete Absorptionszone als Vorwaschstufe durchlaufen wird, deren Aufgabe es ist, mit einer weiteren, beispielsweise kleinen Teilmenge des Waschmittels unter spezifischen Bedingungen weitere Störkomponenten zu entfernen, beispielsweise Cyanwasserstoff (HCN) sowie aliphatische und aromatische Kohlenwasserstoffe, beispielsweise BTX-Aromaten (Benzol, Toluol, Xylole) oder Naphtha. Auch die hierfür erforderlichen, spezifischen Betriebsbedingungen sind dem Fachmann bekannt und können von ihm durch Routineversuche oder fachmännische Berechnungen (z. B. durch Prozesssimulation) bestimmt werden. Die Regenerierung des in einer Vorwäsche mit den genannten, weiteren Störkomponenten beladenen Waschmittels erfolgt beispielsweise durch Heißregenerierung.

Unter Fluidverbindung zwischen zwei Bereichen wird jegliche Art von Verbindung verstanden, die es ermöglicht, dass ein Fluid, beispielsweise das flüssige Waschmittel, von dem einen zu dem anderen der beiden Bereiche strömen kann, unbeachtlich etwaiger zwischengeschalteter Bereiche, Bauteile, Armaturen oder Vorrichtungen. Unter Mitteln zum Bereitstellen, Zuführen oder Ausleiten von Stoffströmen zu bzw. aus Verfahrensstufen bzw. Anlagenteilen werden alle Vorrichtungen, Bauteile und Apparate verstanden, deren Nutzung der Fachmann in der jeweiligen Situation in Betracht zieht, insbesondere Vorratsbehälter, Rohrleitungen, Absperr- und Dosiervorrichtungen wie beispielsweise Ventile, Fördervorrichtungen wie beispielsweise Pumpen, Gebläse, Verdichter.

Etwaige Druckangaben in der Einheit bar(a) beziehen sich auf den Absolutdruck in bar, absolut, sofern nicht im Einzelfall anders angegeben.

Der Erfindung liegt die Erkenntnis zugrunde, dass durch das Aufteilen des gesamten Strippgasstroms auf einen zur Reabsorberkolonne geführten, bevorzugt überwiegenden Teil und einen zu der mehrstufigen, zweiten Flashregenerierungsvorrichtung, insbesondere zu der letzten Flashstufe geführten Restanteil das Rückgewinnen von Prozesskälte verstärkt werden kann, was die Energieeffizienz des Verfahrens bzw. der Anlage verbessert. Ferner wird die Desorption von Kohlendioxid aus dem beladenen Waschmittel bereits stromaufwärts der Reabsorberkolonne verbessert, so dass diese ggf. kleiner ausgestaltet werden kann.

### Besondere Ausgestaltungen der Erfindung

Ein zweiter Aspekt des erfindungsgemäßen Verfahrens ist dadurch gekennzeichnet, der zweite Teil des Strippgases in die stromwärts letzte Flashstufe der mehrstufigen, zweiten Flashregenerierungsvorrichtung eingeleitet wird. Diese letzte Flashstufe und die sich stromabwärts anschließende Reabsorberkolonne befinden sich dabei auf demselben oder einem nur wenig unterschiedlichen Druckniveau, so dass der zweite Teil des Strippgases, der in die Flashregenerierungsvorrichtung eingeleitet wird, nicht verdichtet werden muss und die Abgase aus der Reabsorberkolonne und der letzten Flashstufe, die beide Kohlendioxid und das Strippgas, z. B. Stickstoff, enthalten, einfach kombiniert und ausgeleitet werden können. Sie können dann beispielsweise einer abschließenden Abgasreinigungsvorrichtung, beispielsweise einer separaten Gaswäsche, zugeführt und dort von Schadstoffen befreit werden, bevor sie an die Umgebung abgegeben werden. Beispielsweise können Spuren eines Methanol-Waschmittels aus dem Abgas mittels Wasserwäsche entfernt werden, bevor das Abgas an die Umgebung abgegeben wird. Optional kann das abgetrennte Methanol nach Reinigung als Teil des Waschmittels wiederverwendet werden.

Ein dritter Aspekt des erfindungsgemäßen Verfahrens ist dadurch gekennzeichnet, dass der aus der letzten Flashstufe der mehrstufigen, zweiten Flashregenerierungsvorrichtung ausgeleitete und/oder der aus der Reabsorberkolonne ausgeleitete Kopfproduktstrom, die beide Kohlendioxid und Strippgas enthalten, als Bestandteil des ersten Kühlmittels verwendet wird. Beide Gasströme sind kalt; so weist das Flashgas in einer mehrstufigen Flashregenerierungsvorrichtung in der ersten Stufe eine Temperatur von beispielsweise - 20 °C und in der letzten Stufe sogar eine Temperatur von beispielsweise - 60 °C auf. Beide Gasströme können daher vorteilhaft als Bestandteil des ersten Kühlmittels verwendet werden. Durch Kombination der beiden Gasströme wird der Volumenstrom des Kühlmittels erhöht und dadurch die Wärmeübertragung in den entsprechenden Wärmetauschern verbessert. Alternativ oder zusätzlich kann einer oder beide der genannten Gasströme auch an anderer Stelle des Verfahrens oder der Anlage als Kühlmittel verwendet werden, beispielsweise zur Kühlung des heißregenerierten Waschmittels.

Ein vierter Aspekt des erfindungsgemäßen Verfahrens ist dadurch gekennzeichnet, dass der aus der ersten Flashstufe der mehrstufigen, zweiten Flashregenerierungsvorrichtung ausgeleitete, Kohlendioxid enthaltende Gasstrom zu der Absorptionsvorrichtung zurückgeführt wird. Auf diese Weise können noch in diesem Gasstrom enthaltene Zielkomponenten wie Wasserstoff oder Kohlenmonoxid wiedergewonnen und somit stofflich genutzt werden. Die Rückführung des Gasstroms aus der ersten Flashstufe ist besonders günstig, da das Druckniveau hier noch höher ist als in den nachfolgenden Druckstufen, so dass der Verdichtungsaufwand vor Rückführen zu der Absorptionsvorrichtung vergleichsweise gering ist.

Ein fünfter Aspekt des erfindungsgemäßen Verfahrens ist dadurch gekennzeichnet, dass die zweite Flashregenerierungsvorrichtung mindestens drei Flashstufen umfasst, wobei aus einer mittleren Flashstufe ein Kohlendioxid enthaltener Gasstrom als Kohlendioxid-Produktstrom ausgeleitet wird. Bei einer mittleren Flashstufe wird ein Kohlendioxid enthaltener Gasstrom in besonderer Reinheit gewonnen, da Zielkomponenten wie Wasserstoff oder Kohlenmonoxid bereits bei höherem Druck in einer vorgelagerten Flashstufe ausgeflasht wurden, andererseits der Druck in einer mittleren Flashstufe noch so hoch ist, dass keine Schwefelkomponenten ausgeflasht werden, die die Reinheit des Kohlendioxid-Produktstroms vermindern würden.

Ein sechster Aspekt des erfindungsgemäßen Verfahrens ist dadurch gekennzeichnet, dass alle aus der mehrstufigen, zweiten Flashregenerierungsvorrichtung ausgeleiteten Gasströme als Bestandteile des ersten Kühlmittels verwendet werden. Auf diese Weise kann Prozesskälte in besonders hohem Maße gewonnen oder wiedergewonnen werden, was den Energieverbrauch des Verfahrens oder der Anlage besonders deutlich reduziert. Alternativ oder zusätzlich können diese Gasströme auch an anderer Stelle des Verfahrens oder der Anlage als Kühlmittel verwendet werden, beispielsweise zur Kühlung des heißregenerierten Waschmittels.

Ein siebter Aspekt des erfindungsgemäßen Verfahrens ist dadurch gekennzeichnet, dass die zweite Flashregenerierungsvorrichtung mindestens drei Flashstufen umfasst, wobei der Druck in der ersten Flashstufe zwischen 5 und 30 bar(a), der Druck in einer mittleren Flashstufe zwischen 2,5 und 5,0 bar(a) und der Druck in der letzten Flashstufe zwischen 1,5 und 2,5 bar(a) beträgt. Untersuchungen haben gezeigt, dass bei Einhalten dieser Druckbereiche das Flashgas der ersten Flashstufe besonders günstig zu der Absorptionsvorrichtung zurückgeführt werden kann und aus einer mittleren Flashstufe ein besonders reiner Kohlendioxid-Produktstrom gewonnen wird und der Gasstrom aus der letzten Flashstufe besonders effektiv als Kühlmittel-Bestandteil verwendet werden kann.

Ein achter Aspekt des erfindungsgemäßen Verfahrens ist dadurch gekennzeichnet, dass der zweite Teil des Strippgases höchstens 20 Vol.-%, bevorzugt höchstens 10 Vol.-%, meist bevorzugt höchstens 5 Vol.-% des gesamten im Verfahren verwendeten Strippgases beträgt. Hierdurch wird die Desorption von Kohlendioxid und die Gewinnung von Prozesskälte verstärkt, aber durch die vergleichsweise geringe Menge des zweiten Teils des Strippgases die unerwünschte Desorption von Schwefelkomponenten verhindert.

Ein weiterer Aspekt der erfindungsgemäßen Anlage ist dadurch gekennzeichnet, dass ferner Mittel umfasst werden, die es gestatten, dass der zweite Teil des Strippgases in die stromwärts letzte Flashstufe der mehrstufigen, zweiten Flashregenerierungsvorrichtung eingeleitet wird. Die Vorteile dieses Aspektes der erfindungsgemäßen Anlage entsprechen denjenigen, die im Zusammenhang mit dem zweiten Aspekt des erfindungsgemäßen Verfahrens erörtert wurden.

Ein weiterer Aspekt der erfindungsgemäßen Anlage ist dadurch gekennzeichnet, dass ferner Mittel umfasst werden, die es gestatten, dass der aus der letzten Flashstufe der mehrstufigen, zweiten Flashregenerierungsvorrichtung ausgeleitete und/oder der aus der Reabsorberkolonne ausgeleitete Kopfproduktstrom, die beide Kohlendioxid und Strippgas enthalten, als Bestandteil des ersten Kühlmittels verwendet wird. Die Vorteile dieses Aspektes der erfindungsgemäßen Anlage entsprechen denjenigen, die im Zusammenhang mit dem dritten Aspekt des erfindungsgemäßen Verfahrens erörtert wurden. Alternativ oder zusätzlich kann die Anlage auch Mittel umfassen, die es gestatten, dass diese Gasströme auch an anderer Stelle des Verfahrens oder der Anlage als Kühlmittel verwendet werden, beispielsweise zur Kühlung des heißregenerierten Waschmittels.

Ein weiterer Aspekt der erfindungsgemäßen Anlage ist dadurch gekennzeichnet, dass ferner Mittel umfasst werden, die es gestatten, dass der aus der ersten Flashstufe der mehrstufigen, zweiten Flashregenerierungsvorrichtung ausgeleitete, Kohlendioxid enthaltende Gasstrom zu der Absorptionsvorrichtung zurückgeführt wird. Die Vorteile dieses Aspektes der erfindungsgemäßen Anlage entsprechen denjenigen, die im Zusammenhang mit dem vierten Aspekt des erfindungsgemäßen Verfahrens erörtert wurden.

Ein weiterer Aspekt der erfindungsgemäßen Anlage ist dadurch gekennzeichnet, dass die zweite Flashregenerierungsvorrichtung mindestens drei Flashstufen umfasst, wobei Mittel umfasst werden, die es gestatten, dass aus einer mittleren Flashstufe ein Kohlendioxid enthaltener Gasstrom als Kohlendioxid-Produktstrom ausgeleitet wird. Die Vorteile dieses Aspektes der erfindungsgemäßen Anlage entsprechen denjenigen, die im Zusammenhang mit dem fünften Aspekt des erfindungsgemäßen Verfahrens erörtert wurden.

Ein weiterer Aspekt der erfindungsgemäßen Anlage ist dadurch gekennzeichnet, dass ferner Mittel umfasst werden, die es gestatten, dass alle aus der mehrstufigen, zweiten Flashregenerierungsvorrichtung ausgeleiteten Gasströme als Bestandteile des ersten Kühlmittels verwendet werden. Die Vorteile dieses Aspektes der erfindungsgemäßen Anlage entsprechen denjenigen, die im Zusammenhang mit dem sechsten Aspekt des erfindungsgemäßen Verfahrens erörtert wurden. Alternativ oder zusätzlich kann die Anlage auch Mittel umfassen, die es gestatten, dass diese Gasströme auch an anderer Stelle des Verfahrens oder der Anlage als Kühlmittel verwendet werden, beispielsweise zur Kühlung des heißregenerierten Waschmittels.

### Ausführungsbeispiel

Weitere Merkmale, Vorteile und Anwendungsmöglichkeiten der Erfindung ergeben sich auch aus der nachfolgenden Beschreibung von Ausführungsbeispielen und der Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: eine schematische Darstellung des erfindungsgemäßen Verfahrens bzw. der erfindungsgemäßen Anlage gemäß Stand der Technik,
- Fig. 2: eine schematische Darstellung des erfindungsgemäßen Verfahrens bzw. der erfindungsgemäßen Anlage gemäß einer besonderen Ausgestaltung.

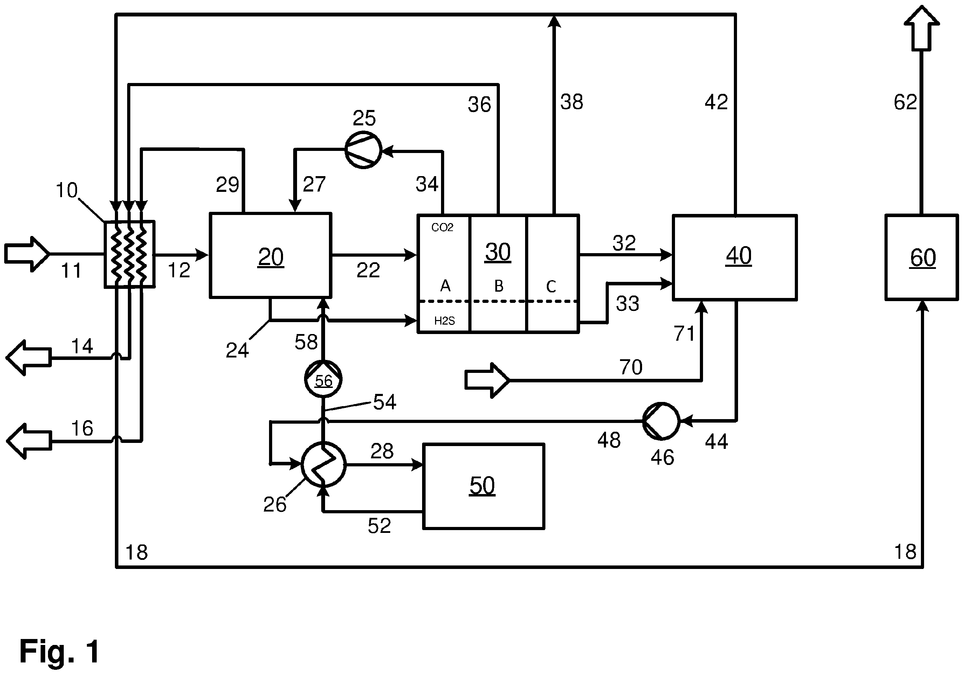

In der in Fig. 1 gezeigten, schematischen Darstellung des Verfahrens bzw. der Anlage gemäß Stand der Technik wird über Leitung 11 ein zu reinigender Rohsynthesegasstrom zugeführt, der Wasserstoff und Kohlenmonoxid als Zielkomponenten und Kohlendioxid und Schwefelkomponenten als Störkomponenten enthält. Der Rohsynthesegasstrom wird nach Abkühlen in einem Wärmetauscher 10 im indirekten Wärmetausch gegen mehrere als Kühlmittel dienende Stoffströme über Leitung 12 einer Absorptionsvorrichtung 20 zugeführt und in diese eingeleitet. Die Absorptionsvorrichtung ist als Absorptionskolonne ausgestaltet und durch einen nicht gezeigten Trennboden in zwei Absorptionszonen unterteilt, die jeweils mit oberflächenvergrößernden Einbauten wie Böden, strukturierten Packungen oder Füllkörpern ausgestattet sind, wobei in Gasströmungsrichtung des Rohsynthesegases zuerst mindestens eine im unteren Teil der Absorptionskolonne angeordnete Schwefelkomponenten-Absorptionszone und nachfolgend mindestens eine im oberen Teil der Absorptionskolonne angeordnete Kohlendioxid-Absorptionszone durchlaufen wird (beide nicht gezeigt).

Optional und bildlich nicht gezeigt kann der Schwefelkomponenten-Absorptionszone eine weitere vorgeschaltete Absorptionszone als Vorwaschstufe vorgeschaltet sein, deren Aufgabe es ist, mit einer weiteren, beispielsweise kleinen Teilmenge des Waschmittels unter spezifischen Bedingungen weitere Störkomponenten zu entfernen, beispielsweise Cyanwasserstoff (HCN) sowie aliphatische und aromatische Kohlenwasserstoffe, beispielsweise BTX-Aromaten (Benzol, Toluol, Xylole) oder Naphtha. Die hierfür erforderlichen, spezifischen Betriebsbedingungen sind dem Fachmann bekannt oder können von ihm durch Routineversuche oder fachmännische Berechnungen (z. B. durch Prozesssimulation) bestimmt werden.

Alle Absorptionszonen werden mit frischem, regeneriertem oder teilregeneriertem Methanol als Waschmittel beaufschlagt. Die Rückführung regenerierten Methanols aus einer Heißregenerierungsvorrichtung 50 wird mittels Leitung 58 angedeutet; in praktischer Ausgestaltung wird frisches, regeneriertes oder teilregeneriertes Methanol an mehreren Zugabestellen zugegeben, die über die Höhe der Absorptionskolonne verteilt sind. Ferner umfasst die Absorptionsvorrichtung eine bildlich nicht dargestellte Kühlanlage, die für die erwünschte, niedrige Temperatur des Waschmittels von beispielsweise - 35 °C und kälter sorgt.

In der Absorptionsvorrichtung wird der über Leitung 12 zugeführte Rohsynthesegasstrom zunächst in einer Schwefelkomponenten-Absorptionszone unter Schwefelkomponenten-Absorptionsbedingungen mit einem Methanol-Teilstrom als erstem Waschmittelstrom in Kontakt gebracht. Sodann wird ein an Schwefelkomponenten abgereicherter Synthesegasstrom aus der Schwefelkomponenten-Absorptionszone ausgeleitet. Ferner wird ein an Schwefelkomponenten angereicherter Waschmittelstrom aus der Schwefelkomponenten-Absorptionszone über Leitung 24 ausgeleitet und einer ersten Flashregenerierungsvorrichtung zugeführt, die beispielsweise drei Flashstufen mit schrittweise abnehmenden Drücken umfasst.

Die erste Flashregenerierungsvorrichtung zur Abtrennung von Kohlendioxid aus dem Schwefelkomponenten enthaltenden Waschmittel und die nachfolgend erörterte, zweite Flashregenerierungsvorrichtung zur Abtrennung von Kohlendioxid aus dem mit Kohlendioxid beladenem Waschmittel sind in den Figuren vereinfachend als Funktionsblock mit Bezugszeichen 30 dargestellt, wobei die Trennung beider Bereiche durch eine waagerechte, gestrichelte Linie angedeutet wird, die die zweite Flashregenerierungsvorrichtung (oberer Bereich) von der ersten Flashregenerierungsvorrichtung (unterer Bereich) abtrennt. In der Praxis werden beide Flashregenerierungsvorrichtungen beispielsweise mehrstufig als Kaskade mehrerer hintereinandergeschalteter und beispielsweise mit integriertem oder separatem Flüssigkeitsabscheider ausgestaltet, in denen der Druck schrittweise abnimmt. Die in den Flashregenerierungsvorrichtungen anzuwendenden, allgemeinen Betriebsbedingungen sind dem Fachmann bekannt oder können von ihm im spezifischen Anwendungsfall durch Routineversuche oder fachmännische Berechnungen (z. B. durch Prozesssimulation) bestimmt werden.

Mittels Leitung 33 wird ein durch Flashen an Kohlendioxid abgereicherter, Schwefelkomponenten enthaltender dritter Waschmittelstrom aus der ersten Flashregenerierungsvorrichtung ausgeleitet und einer Strippkolonne (Reabsorberkolonne) 40 zugeführt und in diese eingeleitet.

Der aus der Schwefelkomponenten-Absorptionszone ausgeleitete, an Schwefelkomponenten abgereicherte Synthesegasstrom wird in eine Kohlendioxid-Absorptionszone eingeleitet, die bei Ausgestaltung der Absorptionsvorrichtung als Absorptionskolonne zumeist in deren oberem Teil angeordnet und von der Schwefelkomponenten-Absorptionszone durch einen Trennboden, beispielsweise einen Kaminboden, getrennt ist. In der Kohlendioxid-Absorptionszone wird der an Schwefelkomponenten abgereicherte Synthesegasstrom unter Kohlendioxid-Absorptionsbedingungen mit einem zweiten Waschmittelstrom in Kontakt gebracht, der beispielsweise als Teilstrom aus dem über Leitung 58 herangeführten, heißregenerierten Methanol erhalten wird. Sodann wird ein an Kohlendioxid abgereicherter Synthesegasstrom aus der Kohlendioxid-Absorptionszone über Leitung 29 ausgeleitet, dient im nachfolgenden Wärmetauscher 10 als Kühlmittel und wird somit im indirekten Wärmetausch gegen herangeführtes Rohsynthesegas erwärmt. Der auf diese Weise erwärmte Synthesegasstrom wird dann über Leitung 16 als Reinsynthesegasstrom aus dem Verfahren bzw. der Anlage ausgeleitet.

Über Leitung 22 wird ein an Kohlendioxid angereicherter Waschmittelstrom aus der Absorptionsvorrichtung ausgeleitet und einer mehrstufigen, zweiten Flashregenerierungsvorrichtung zugeführt (Teil des Funktionsblocks mit Bezugszeichen 30 oberhalb der gestrichelten Linie), die im vorliegenden Ausführungsbeispiel mit drei Flashstufen A, B, C ausgestaltet ist, wobei die Drücke in den einzelnen Flashstufen in Strömungsrichtung des Waschmittelstroms abnehmen. In einem Beispiel beträgt der Druck in der in der ersten Flashstufe zwischen 5 und 30 bar(a). In einem weiteren Beispiel beträgt der Druck in einer mittleren Flashstufe zwischen 2,5 und 5,0 bar(a). In einem weiteren Beispiel beträgt der Druck in der letzten Flashstufe zwischen 1,5 und 2,5 bar(a). In einem weiteren Beispiel beträgt der Druck in der ersten Flashstufe zwischen 5 und 30 bar(a), der Druck in einer mittleren Flashstufe zwischen 2,5 und 5,0 bar(a) und der Druck in der letzten Flashstufe zwischen 1,5 und 2,5 bar(a).

In der ersten Flashstufe Ader mehrstufigen, zweiten Flashregenerierungsvorrichtung wird ein Flashgas gewonnen, das noch signifikante Anteile von Wasserstoff und Kohlenmonoxid als Zielkomponenten enthält. Um diese zurück zu gewinnen und das Flashgas stofflich zu nutzen, wird dieser Flashgasstrom über Leitung 34, Verdichter 25 und Leitung 27 zu der Absorptionsvorrichtung zurückgeführt und in diese eingeleitet.

In der zweiten Flashstufe B der mehrstufigen, zweiten Flashregenerierungsvorrichtung wird ein Flashgas gewonnen, das Kohlendioxid in hoher Reinheit enthält. Der entsprechende Flashgasstrom wird daher über Leitung 36, Wärmetauscher 10 und Leitung 14 als Kohlendioxid-Produktstrom ausgeleitet. Da er kalt ist, wird auch er im Wärmetauscher 10 als Kühlmittel genutzt, um den zugeführten Rohsynthesegasstrom im indirekten Wärmetausch zu kühlen.

Der in der dritten Flashstufe C der mehrstufigen, zweiten Flashregenerierungsvorrichtung erhaltene, Kohlendioxid enthaltende Flashgasstrom wird über Leitung 38, Leitung 42, Wärmetauscher 10 und Leitung 18 einer Abgasreinigungsvorrichtung 60 zugeführt, in dieser beispielsweise durch Gaswäsche und/oder Adsorption von Schadstoffen befreit und sodann über Leitung 62 an die Umgebung abgegeben. Beispielsweise können Spuren eines Methanol-Waschmittels aus dem Abgas mittels Wasserwäsche entfernt werden, bevor das Abgas an die Umgebung abgegeben wird. Optional kann das abgetrennte Methanol nach Reinigung als Teil des Waschmittels wiederverwendet werden.

Um insbesondere die Desorption von CO₂ aus dem beladenen Waschmittel bzw. Absorbens möglichst vollständig durchzuführen, wird auch der aus der zweiten Flashregenerierungsvorrichtung ausgeleitete, an Kohlendioxid abgereicherte und somit bereits teilregenerierte vierte Waschmittelstrom über Leitung 32 der Strippkolonne (Reabsorberkolonne) 40 aufgegeben, in deren unterem Teil ein Strippgas, beispielsweise Stickstoff, über Leitungen 70 und 71 eingeleitet und mit dem Waschmittel in Kontakt gebracht wird. Hierdurch wird der Stoffaustausch zwischen Gasphase und Flüssigphase intensiviert und weitere Anteile an CO₂ aus dem Waschmittel desorbiert. Dabei kommt es allerdings auch in unerwünschter Weise zur Desorption noch im Waschmittel gebundener Schwefelkomponenten, beispielsweise von H₂S. Um dies zu verhindern bzw. rückgängig zu machen, ist der obere Teil der Strippkolonne als Reabsorber ausgestaltet, in dem H₂S mittels einer kleinen Menge frischen, regenerierten oder teilregenerierten Waschmittels aus den ausgestrippten Gasen ausgewaschen und somit reabsorbiert wird (nicht bildlich gezeigt). Die auf diese Weise ausgestaltete Strippkolonne wird daher auch als Reabsorberkolonne bezeichnet.

Vom Kolonnenkopf der Reabsorberkolonne wird über Leitung 42 ein gasförmiger Kopfproduktstrom ausgeleitet, der Kohlendioxid und das Strippgas enthält. Er wird über Wärmetauscher 10 und Leitung 18 ebenfalls der Abgasreinigungsvorrichtung 60 zugeführt, in dieser beispielsweise durch Gaswäsche und/oder Adsorption von Schadstoffen befreit und sodann über Leitung 62 an die Umgebung abgegeben. Bevorzugt erfolgt dies gemeinsam mit dem über Leitung 38 aus der Flashregenerierungsvorrichtung ausgeleiteten Abgasstrom.

Im Kolonnensumpf der Reabsorberkolonne wird ein mit Schwefelkomponenten beladener, flüssiger Waschmittelstrom erhalten, der über Leitung 44, Pumpe 46, Leitung 48, Wärmetauscher 26 und Leitung 28 zu einer Heißregenerierungsvorrichtung 50 geführt und in diese eingeleitet wird. Im Wärmetauscher 26 erfolgt eine Vorwärmung des mit Schwefelkomponenten beladenen, flüssigen Waschmittelstroms im indirekten Wärmetausch gegen das aus der Heißregenerierungsvorrichtung 50 ausgeleitete, heißregenerierte Methanol-Waschmittel, das dabei gekühlt wird.

In der Heißregenerierungsvorrichtung 50 wird das beladene Methanol-Waschmittel unter dem Fachmann bekannten Heißregenerierungsbedingungen behandelt, wobei regeneriertes Methanol-Waschmittel erhalten wird, das über Leitung 52 aus der Heißregenerierungsvorrichtung ausgeleitet und über Wärmetauscher 26, Leitung 54, Pumpe 56 und Leitung 58 zu der Absorptionsvorrichtung zurückgeführt wird. Ferner wird in der Heißregenerierungsvorrichtung ein mit Schwefelkomponenten wie H₂S, COS oder Mercaptanen beladener Gasstrom erhalten, der über eine nicht gezeigte Leitung aus der Heißregenerierungsvorrichtung ausgeleitet wird. Er kann beispielsweise einer nicht bildlich gezeigten Anlage zur Schwefelrückgewinnung nach dem Claus-Verfahren oder einem anderen Schwefelrückgewinnungsverfahren zugeführt werden.

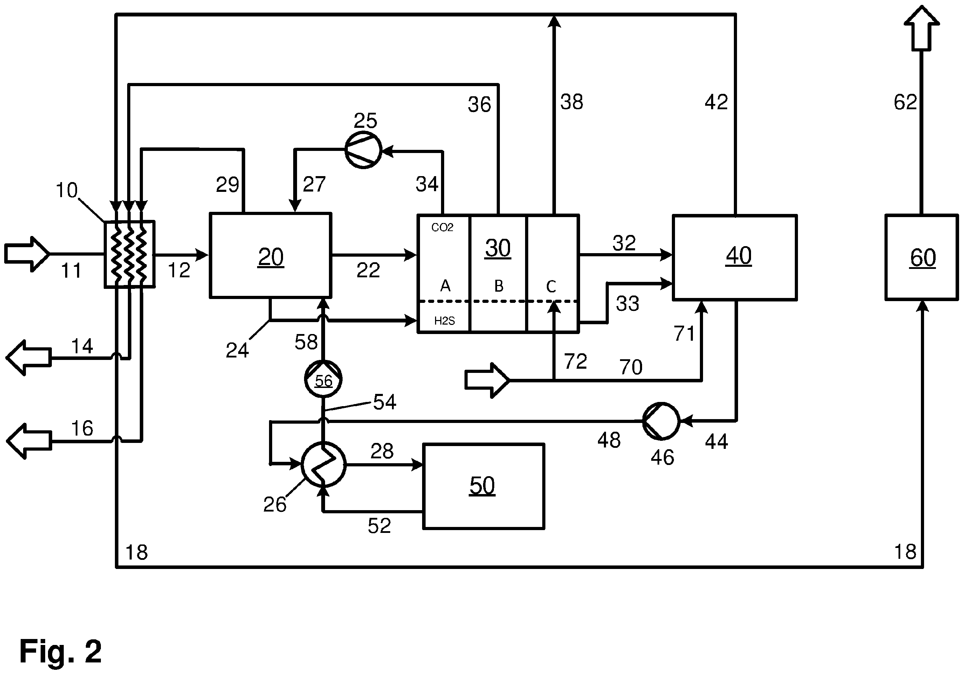

Fig. 2 zeigt eine schematische Darstellung des erfindungsgemäßen Verfahrens bzw. der erfindungsgemäßen Anlage gemäß einer besonderen Ausgestaltung, die in ihren Einzelheiten derjenigen entspricht, die im Zusammenhang mit Fig. 1 erörtert wurde. Erfindungsgemäß wird aber nunmehr nur ein erster Teil des über Leitung 70 herangeführten Strippgasstroms über Leitung 71 in die Reabsorberkolonne eingeleitet, während ein zweiter Teil des Strippgases über Leitung 72 in die mehrstufige, zweite Flashregenerierungsvorrichtung eingeleitet wird. Durch das Aufteilen des gesamten Strippgasstroms auf einen zur Reabsorberkolonne geführten, bevorzugt überwiegenden Teil und einen zu der mehrstufigen, zweiten Flashregenerierungsvorrichtung, insbesondere zu der letzten Flashstufe geführten Restanteil kann das Rückgewinnen von Prozesskälte verstärkt werden, was die Energieeffizienz des Verfahrens bzw. der Anlage verbessert. Ferner wird die Desorption von Kohlendioxid aus dem beladenen Waschmittel bereits stromaufwärts der Reabsorberkolonne verbessert, so dass diese ggf. kleiner ausgestaltet werden kann.

In weiterer, nicht gezeigter Ausgestaltung der Erfindung wird einer, mehrere oder alle der in der Flashregenerierungsvorrichtung erhaltenen, kalten Flashgasströme als Kühlmittel mittels zusätzlicher Wärmetauscher zum Kühlen des über Leitung 58 zu der Absorptionsvorrichtung zurückgeführten, regenerierten Waschmittels genutzt.

### Zahlenbeispiel

Der Anlagenbetrieb einer Anlage zum Reinigen von Rohsynthesegas wurde in der Weise geändert, dass von dem zuvor (Vergleichsbeispiel) zu 100 % zu der Reabsorberkolonne zugeführten Stickstoff-Strippgasstrom nunmehr erfindungsgemäß 5 Vol.-% zu der letzten Flashstufe der dreistufigen Flashregenerierungsvorrichtung zugeführt und der verbliebene Anteil von 95 Vol.-% der Reabsorberkolonne zugeführt wurde. Die kalten Flashgase wurden einem Wärmetauscher 10 gemäß Fig. 1 und Fig. 2 zugeführt und die zurückgewonnene Prozesskälte zum Kühlen des eingeleiteten Rohsynthesegases verwendet. Hierdurch konnte relativ zum Vergleichsbeispiel rund 2 % der Kühlleistung eingespart werden. Ferner verringerte sich der Kohlendioxid-Gehalt im Reinsynthesegas von 14 Vol.-ppm (Vergleichsbeispiel) auf 10 Vol.-ppm (Erfindung).

### Bezugszeichenliste

- [10]: Wärmetauscher
- [11]: Leitung
- [12]: Leitung
- [14]: Leitung
- [16]: Leitung
- [18]: Leitung
- [20]: Absorptionsvorrichtung (Absorptionskolonne)
- [22]: Leitung
- [24]: Leitung
- [25]: Verdichter
- [26]: Wärmetauscher
- [27]: Leitung
- [28]: Leitung
- [29]: Leitung
- [30]: Flashregenerierungsvorrichtung mit Stufen A, B, C unterer Bereich (H2S): erste Flashregenerierungsvorrichtung oberer Bereich (CO2): zweite Flashregenerierungsvorrichtung
- [32]: Leitung
- [33]: Leitung
- [34]: Leitung
- [36]: Leitung
- [38]: Leitung
- [40]: Strippkolonne, Reabsorberkolonne
- [42]: Leitung
- [44]: Leitung
- [46]: Pumpe
- [48]: Leitung
- [50]: Heißregenerierungsvorrichtung
- [52]: Leitung
- [54]: Leitung
- [56]: Pumpe
- [58]: Leitung
- [60]: Abgasreinigungsvorrichtung
- [62]: Leitung
- [70]: Leitung
- [71]: Leitung
- [72]: Leitung

## Patentansprüche

1. Verfahren zum Reinigen eines Wasserstoff und Kohlenmonoxid als Zielkomponenten und Kohlendioxid und Schwefelkomponenten als Störkomponenten enthaltenden Rohsynthesegases durch Gaswäsche mit einem physikalisch wirkenden, flüssigen, für Kohlendioxid und Schwefelkomponenten selektiven Waschmittel, umfassend folgende Schritte:
(a) Bereitstellen einer Absorptionsvorrichtung (20), umfassend mindestens zwei Absorptionszonen, die jeweils mit oberflächenvergrößernden Einbauten wie Böden, strukturierten Packungen oder Füllkörpern ausgestattet sind, wobei in Gasströmungsrichtung des Rohsynthesegases zuerst mindestens eine Schwefelkomponenten-Absorptionszone und nachfolgend mindestens eine Kohlendioxid-Absorptionszone durchlaufen wird,
(b) Bereitstellen eines zu reinigenden Rohsynthesegasstroms (11), Abkühlen des Rohsynthesegasstroms durch indirekten Wärmetausch (10) mit einem Kühlmittel, Einleiten (12) des abgekühlten Rohsynthesegasstroms in die mindestens eine Schwefelkomponenten-Absorptionszone (20),
(c) Inkontaktbringen des abgekühlten Rohsynthesegasstroms in der mindestens einen Schwefelkomponenten-Absorptionszone (20) unter Schwefelkomponenten-Absorptionsbedingungen mit einem ersten Waschmittelstrom, Ausleiten eines an Schwefelkomponenten abgereicherten Synthesegasstroms aus der mindestens einen Schwefelkomponenten-Absorptionszone (20), Ausleiten (24) eines an Schwefelkomponenten angereicherten Waschmittelstroms aus der mindestens einen Schwefelkomponenten-Absorptionszone, Einleiten des an Schwefelkomponenten abgereicherten Synthesegasstroms in die mindestens eine Kohlendioxid-Absorptionszone (20),
(d) Inkontaktbringen des an Schwefelkomponenten abgereicherten Synthesegasstroms in der mindestens einen Kohlendioxid-Absorptionszone (20) unter Kohlendioxid-Absorptionsbedingungen mit einem zweiten Waschmittelstrom, Ausleiten eines an Kohlendioxid abgereicherten Synthesegasstroms aus der mindestens einen Kohlendioxid-Absorptionszone (20) als Reinsynthesegas (29), Ausleiten eines an Kohlendioxid angereicherten Waschmittelstroms (22) aus der mindestens einen Kohlendioxid-Absorptionszone (20),
(e) Zuführen (24) des an Schwefelkomponenten angereicherten Waschmittelstroms zu einer ersten Flashregenerierungsvorrichtung (30) und Einleiten in dieselbe, Ausleiten eines durch Flashen an Kohlendioxid abgereicherten, Schwefelkomponenten enthaltenden, dritten Waschmittelstroms (33) und mindestens eines ersten Kohlendioxid enthaltenden Gasstroms (34) aus der ersten Flashregenerierungsvorrichtung (30),
(f) Ausleiten eines an Kohlendioxid angereicherten Waschmittelstroms (22) aus der Absorptionsvorrichtung (20), Einleiten desselben in eine mehrstufige, zweite Flashregenerierungsvorrichtung (30), wobei die Drücke in den einzelnen Flashstufen (30A, 30B, 30C) in Strömungsrichtung des Waschmittelstroms abnehmen, Ausleiten eines durch mehrstufiges Flashen an Kohlendioxid abgereicherten, vierten Waschmittelstroms (32) und mindestens eines zweiten Kohlendioxid enthaltenden Gasstroms (36) aus der zweiten Flashregenerierungsvorrichtung (30),
(g) Einleiten des dritten und des vierten (32) Waschmittelstroms in eine Reabsorberkolonne (40), Strippen des dritten Waschmittelstroms oder des dritten und des vierten Waschmittelstroms in der Reabsorberkolonne (40) mit einem ersten Teil eines Strippgases (70, 71), Ausleiten eines gasförmigen Kopfproduktstroms (42), umfassend Kohlendioxid und Strippgas, aus der Reabsorberkolonne (40), Ausleiten eines flüssigen Sumpfproduktstroms (44) aus der Reabsorberkolonne (40), Zuführen des Sumpfproduktstroms (44) zu einer Heißregenerierungsvorrichtung (50) und Einleiten in dieselbe,
(h) Heißregenerieren des Sumpfproduktstroms (44) der Reabsorberkolonne (40) in der Heißregenerierungsvorrichtung (50) unter Heißregenerierungsbedingungen, Ausleiten eines an Schwefelkomponenten angereicherten Produktgasstroms und eines an Schwefelkomponenten abgereicherten, fünften Waschmittelstroms (52) aus der Heißregenerierungsvorrichtung (50), Rückführen mindestens eines Teils des fünften Waschmittelstroms (52) nach Abkühlen (26) als Bestandteil des ersten und/oder zweiten Waschmittelstroms in die Absorptionsvorrichtung (20),
**dadurch gekennzeichnet, dass**
(i) ein zweiter Teil des Strippgases (72) in die mehrstufige, zweite Flashregenerierungsvorrichtung (30) eingeleitet und aus derselben ein Kohlendioxid und Strippgas umfassender Abgasstrom (38) ausgeleitet wird.

2. Verfahren nach Anspruch 1, **dadurch gekennzeichnet, dass** der zweite Teil des Strippgases (72) in die stromwärts letzte Flashstufe (30C) der mehrstufigen, zweiten Flashregenerierungsvorrichtung (30) eingeleitet wird.

3. Verfahren nach Anspruch 1 oder 2, **dadurch gekennzeichnet, dass** der aus der letzten Flashstufe (30C) der mehrstufigen, zweiten Flashregenerierungsvorrichtung (30) ausgeleitete (38) und/oder der aus der Reabsorberkolonne ausgeleitete Kopfproduktstrom (42), die beide Kohlendioxid und Strippgas enthalten, als Bestandteil des Kühlmittels verwendet wird.

4. Verfahren nach einem der vorigen Ansprüche, **dadurch gekennzeichnet, dass** der aus der ersten Flashstufe (30A) der mehrstufigen, zweiten Flashregenerierungsvorrichtung (30) ausgeleitete, Kohlendioxid enthaltende Gasstrom (34) zu der Absorptionsvorrichtung (20) zurückgeführt wird.

5. Verfahren nach einem der vorigen Ansprüche, **dadurch gekennzeichnet, dass** die zweite Flashregenerierungsvorrichtung (30) mindestens drei Flashstufen (30A, 30B, 30C) umfasst, wobei aus einer mittleren Flashstufe (30B) ein Kohlendioxid enthaltener Gasstrom (36) als Kohlendioxid-Produktstrom ausgeleitet wird.

6. Verfahren nach einem der vorigen Ansprüche, **dadurch gekennzeichnet, dass** alle aus der mehrstufigen, zweiten Flashregenerierungsvorrichtung (30) ausgeleiteten Gasströme (34, 36, 38) als Bestandteile des Kühlmittels verwendet werden.

7. Verfahren nach einem der vorigen Ansprüche, **dadurch gekennzeichnet, dass** die zweite Flashregenerierungsvorrichtung (30) mindestens drei Flashstufen (30A, 30B, 30C) umfasst, wobei der Druck in der ersten Flashstufe (30A) zwischen 5 und 30 bar(a), der Druck in einer mittleren Flashstufe (30B) zwischen 2,5 und 5,0 bar(a) und der Druck in der letzten Flashstufe (30C) zwischen 1,5 und 2,5 bar(a) beträgt.

8. Verfahren nach einem der vorigen Ansprüche, **dadurch gekennzeichnet, dass** der zweite Teil des Strippgases (72) höchstens 20 Vol.-%, bevorzugt höchstens 10 Vol.-%, meist bevorzugt höchstens 5 Vol.-% des gesamten im Verfahren verwendeten Strippgases (70) beträgt.

9. Anlage zum Reinigen eines Wasserstoff und Kohlenmonoxid als Zielkomponenten und Kohlendioxid und Schwefelkomponenten als Störkomponenten enthaltenden Rohsynthesegases durch Gaswäsche mit einem physikalisch wirkenden, flüssigen, für Kohlendioxid und Schwefelkomponenten selektiven Waschmittel, umfassend folgende, miteinander in Fluidverbindung stehenden Baugruppen und Bestandteile:
(a) eine Absorptionsvorrichtung (20), umfassend mindestens zwei Absorptionszonen, die jeweils mit oberflächenvergrößernden Einbauten wie Böden, strukturierte Packungen oder Füllkörpern ausgestattet sind, so ausgestaltet, dass in Gasströmungsrichtung des Rohsynthesegases zuerst mindestens eine erste Absorptionszone (Schwefelkomponenten-Absorptionszone) und nachfolgend mindestens eine zweite Absorptionszone (Kohlendioxid-Absorptionszone) durchlaufen wird,
(b) Mittel (11) zum Bereitstellen eines zu reinigenden Rohsynthesegasstroms, Mittel (10) zum Abkühlen des Rohsynthesegasstroms durch indirekten Wärmetausch mit einem Kühlmittel, Mittel (12) zum Einleiten des abgekühlten Rohsynthesegasstroms in die mindestens eine Schwefelkomponenten-Absorptionszone (20),
(c) Mittel zum Inkontaktbringen des abgekühlten Rohsynthesegasstroms in der mindestens einen Schwefelkomponenten-Absorptionszone (20) mit einem ersten Waschmittelstrom, Mittel zum Ausleiten eines an Schwefelkomponenten abgereicherten Synthesegasstroms aus der mindestens einen Schwefelkomponenten-Absorptionszone, Mittel (24) zum Ausleiten eines an Schwefelkomponenten angereicherten Waschmittelstroms aus der mindestens einen Schwefelkomponenten-Absorptionszone, Mittel zum Einleiten des an Schwefelkomponenten abgereicherten Synthesegasstroms in die mindestens eine Kohlendioxid-Absorptionszone,
(d) Mittel zum Inkontaktbringen des es an Schwefelkomponenten abgereicherten Synthesegasstroms in der mindestens einen Kohlendioxid-Absorptionszone (20) mit einem zweiten Waschmittelstrom, Mittel (29) zum Ausleiten eines an Kohlendioxid abgereicherten Synthesegasstroms aus der mindestens einen Kohlendioxid-Absorptionszone (20) als Reinsynthesegas, Mittel (22) zum Ausleiten eines an Kohlendioxid angereicherten Waschmittelstroms aus der mindestens einen Kohlendioxid-Absorptionszone,
(e) eine erste Flashregenerierungsvorrichtung (30), Mittel (24) zum Zuführen des an Schwefelkomponenten angereicherten Waschmittelstroms zu der ersten Flashregenerierungsvorrichtung (30) und Einleiten in dieselbe, Mittel (33, 34) zum Ausleiten eines durch Flashen an Kohlendioxid abgereicherten, Schwefelkomponenten enthaltenden, dritten Waschmittelstroms (33) und mindestens eines ersten Kohlendioxid enthaltenden Gasstroms (34) aus der ersten Flashregenerierungsvorrichtung,
(f) eine mehrstufige, zweite Flashregenerierungsvorrichtung (30), so ausgestaltet, dass die Drücke in den einzelnen Flashstufen (30A, 30B, 30C) in Strömungsrichtung des Waschmittelstroms abnehmen, Mittel (22) zum Ausleiten eines an Kohlendioxid angereicherten Waschmittelstroms aus der Absorptionsvorrichtung (20), Mittel (22) zum Einleiten desselben in die mehrstufige, zweite Flashregenerierungsvorrichtung (30), Mittel (32, 36) zum Ausleiten eines durch mehrstufiges Flashen an Kohlendioxid abgereicherten, vierten Waschmittelstroms (32) und mindestens eines zweiten Kohlendioxid enthaltenden Gasstroms (36) aus der zweiten Flashregenerierungsvorrichtung (30),
(g) eine Reabsorberkolonne (40), Mittel (32, 33) zum Einleiten des dritten (33) und des vierten (32) Waschmittelstroms in die Reabsorberkolonne (40), Mittel (70, 71) zum Zuführen eines ersten Teils (71) eines Strippgases zu der Reabsorberkolonne (40), Mittel (42) zum Ausleiten eines gasförmigen Kopfproduktstroms, umfassend Kohlendioxid und Strippgas, aus der Reabsorberkolonne (40), eine Heißregenerierungsvorrichtung (50), Mittel (44) zum Ausleiten eines flüssigen Sumpfproduktstroms aus der Reabsorberkolonne (50) und Mittel (46, 48, 28) zum Zuführen des Sumpfproduktstroms zu einer Heißregenerierungsvorrichtung (50) und Einleiten in dieselbe, wobei die Reabsorberkolonne (40) so ausgestaltet ist, dass ein Strippen des dritten Waschmittelstroms oder des dritten und des vierten Waschmittelstroms in der Reabsorberkolonne mit einem ersten Teil (71) eines Strippgases ermöglicht wird,
(h) Mittel (52) zum Ausleiten eines an Schwefelkomponenten angereicherten Produktgasstroms und eines an Schwefelkomponenten abgereicherten, fünften Waschmittelstroms aus der Heißregenerierungsvorrichtung (50), Mittel (26, 54, 56, 58) zum Rückführen mindestens eines Teils des fünften Waschmittelstroms nach Abkühlen als Bestandteil des ersten und/oder zweiten Waschmittelstroms in die Absorptionsvorrichtung (20),
**dadurch gekennzeichnet, dass**
(i) Mittel (70, 72, 38) umfasst werden, die es gestatten, dass ein zweiter Teil des Strippgases in die mehrstufige, zweite Flashregenerierungsvorrichtung (30) eingeleitet und aus derselben ein Kohlendioxid und Strippgas umfassender Abgasstrom (38) ausgeleitet wird.

10. Anlage nach Anspruch 9, **dadurch gekennzeichnet, dass** ferner Mittel (72) umfasst werden, die es gestatten, dass der zweite Teil des Strippgases in die stromwärts letzte Flashstufe (30C) der mehrstufigen, zweiten Flashregenerierungsvorrichtung (30) eingeleitet wird.

11. Anlage nach Anspruch 9 oder 10, **dadurch gekennzeichnet, dass** ferner Mittel (38, 42) umfasst werden, die es gestatten, dass der aus der letzten Flashstufe (30C) der mehrstufigen, zweiten Flashregenerierungsvorrichtung (30) ausgeleitete (38) und/oder der aus der Reabsorberkolonne (40) ausgeleitete Kopfproduktstrom (42), die beide Kohlendioxid und Strippgas enthalten, als Bestandteil des Kühlmittels verwendet wird.

12. Anlage nach einem der vorigen Ansprüche, **dadurch gekennzeichnet, dass** ferner Mittel (34) umfasst werden, die es gestatten, dass der aus der ersten Flashstufe (30A) der mehrstufigen, zweiten Flashregenerierungsvorrichtung (30) ausgeleitete, Kohlendioxid enthaltende Gasstrom (34) zu der Absorptionsvorrichtung (20) zurückgeführt wird.

13. Anlage nach einem der vorigen Ansprüche, **dadurch gekennzeichnet, dass** die zweite Flashregenerierungsvorrichtung (30) mindestens drei Flashstufen (30A, 30B, 30C) umfasst, wobei Mittel (36) umfasst werden, die es gestatten, dass aus einer mittleren Flashstufe ein Kohlendioxid enthaltener Gasstrom (36) als Kohlendioxid-Produktstrom ausgeleitet wird.

14. Anlage nach einem der vorigen Ansprüche, **dadurch gekennzeichnet, dass** ferner Mittel (34, 36, 38) umfasst werden, die es gestatten, dass alle aus der mehrstufigen, zweiten Flashregenerierungsvorrichtung (30) ausgeleiteten Gasströme (34, 36, 38) als Bestandteile des Kühlmittels verwendet werden.

## Claims

1. Process for purifying a raw synthesis gas containing hydrogen and carbon monoxide as target components and carbon dioxide and sulfur components as disruptive components by gas scrubbing with a physically acting, liquid scrubbing medium selective for carbon dioxide and sulfur components comprising the steps of:
(a) providing an absorption apparatus (20) comprising at least two absorption zones each provided with surface area-increasing internals such as trays, structured packings or random packings, wherein in the gas flow direction of the raw synthesis gas initially at least one sulfur components absorption zone and subsequently at least one carbon dioxide absorption zone is traversed,
(b) providing a raw synthesis gas stream (11) to be purified, cooling the raw synthesis gas stream through indirect heat exchange (10) with a cooling medium, introducing (12) the cooled raw synthesis gas stream to the at least one sulfur components absorption zone (20),
(c) contacting the cooled raw synthesis gas stream in the at least one sulfur components absorption zone (20) under sulfur components absorption conditions with a first scrubbing medium stream, discharging a synthesis gas stream depleted in sulfur components from the at least one sulfur components absorption zone (20), discharging (24) a scrubbing medium stream enriched in sulfur components from the at least one sulfur components absorption zone, introducing the synthesis gas stream depleted in sulfur components to the at least one carbon dioxide absorption zone (20),
(d) contacting the synthesis gas stream depleted in sulfur components in the at least one carbon dioxide absorption zone (20) under carbon dioxide absorption conditions with a second scrubbing medium stream, discharging a synthesis gas stream depleted in carbon dioxide from the at least one carbon dioxide absorption zone (20) as pure synthesis gas (29), discharging a scrubbing medium stream (22) enriched in carbon dioxide from the at least one carbon dioxide absorption zone (20),
(e) supplying (24) the scrubbing medium stream enriched in sulfur components to a first flash regeneration apparatus (30) and introducing it thereto, discharging a third scrubbing medium stream (33) containing sulfur components and depleted in carbon dioxide by flashing and at least one first carbon dioxide-containing gas stream (34) from the first flash regeneration apparatus (30),
(f) discharging a scrubbing medium stream (22) enriched in carbon dioxide from the absorption apparatus (20), introducing it to a multistage second flash regeneration apparatus (30), wherein the pressures in the individual flash stages (30A, 30B, 30C) decrease in the flow direction of the scrubbing medium stream, discharging a fourth scrubbing medium stream (32) depleted in carbon dioxide through multistage flashing and at least one second carbon dioxide-containing gas stream (36) from the second flash regeneration apparatus (30),
(g) introducing the third and the fourth (32) scrubbing medium stream to a reabsorber column (40), stripping the third scrubbing medium stream or the third and the fourth scrubbing medium stream in the reabsorber column (40) with a first portion of a stripping gas (70, 71), discharging a gaseous top product stream (42) comprising carbon dioxide and stripping gas from the reabsorber column (40), discharging a liquid sump product stream (44) from the reabsorber column (40), supplying the sump product stream (44) to a hot regeneration apparatus (50) and introducing it thereto,
(h) hot regenerating the sump product stream (44) from the reabsorber column (40) in the hot regeneration apparatus (50) under hot regeneration conditions, discharging a product gas stream enriched in sulfur components and a fifth scrubbing medium stream (52) depleted in sulfur components from the hot regeneration apparatus (50), recycling at least a portion of the fifth scrubbing medium stream (52) after cooling (26) as a constituent of the first and/or second scrubbing medium stream to the absorption apparatus (20),
**characterized in that**
(i) a second portion of the stripping gas (72) is introduced to the multistage second flash regeneration apparatus (30) and an offgas stream (38) comprising carbon dioxide and stripping gas is discharged therefrom.

2. Process according to Claim 1, **characterized in that** the second portion of the stripping gas (72) is introduced to the furthest downstream flash stage (30C) of the multistage second flash regeneration apparatus (30) .

3. Process according to Claim 1 or 2, **characterized in that** the top product stream (42) discharged (38) from the last flash stage (30C) of the multistage second flash regeneration apparatus (30) and/or the top product stream (42) discharged from the reabsorber column, both of which contain carbon dioxide and stripping gas, are used as a constituent of the cooling medium.

4. Process according to any of the preceding claims, **characterized in that** the carbon dioxide-containing gas stream (34) discharged from the first flash stage (30A) of the multistage second flash regeneration apparatus (30) is recycled to the absorption apparatus (20).

5. Process according to any of the preceding claims, **characterized in that** the second flash regeneration apparatus (30) comprises at least three flash stages (30A, 30B, 30C), wherein a carbon dioxide-containing gas stream (36) is discharged as a carbon dioxide product stream from a middle flash stage (30B).

6. Process according to any of the preceding claims, **characterized in that** all gas streams (34, 36, 38) discharged from the multistage second flash regeneration apparatus (30) are used as constituents of the cooling medium.

7. Process according to any of the preceding claims, **characterized in that** the second flash regeneration apparatus (30) comprises at least three flash stages (30A, 30B, 30C), wherein the pressure in the first flash stage (30A) is between 5 and 30 bar(a), the pressure in a middle flash stage (30B) is between 2.5 and 5.0 bar(a) and the pressure in the last flash stage (30C) is between 1.5 and 2.5 bar(a).

8. Process according to any of the preceding claims, **characterized in that** the second portion of the stripping gas (72) is not more than 20% by volume, preferably not more than 10% by volume, most preferably not more than 5% by volume, of the total stripping gas (70) used in the process.

9. Plant for purifying a raw synthesis gas containing hydrogen and carbon monoxide as target components and carbon dioxide and sulfur components as disruptive components by gas scrubbing with a physically acting, liquid scrubbing medium selective for carbon dioxide and sulfur components comprising the following assemblies and constituents in fluid connection with one another:
(a) an absorption apparatus (20) comprising at least two absorption zones each provided with surface area-increasing internals such as trays, structured packings or random packings, configured such that in the gas flow direction of the raw synthesis gas initially at least one first absorption zone (sulfur components absorption zone) and subsequently at least one second absorption zone (carbon dioxide absorption zone) is traversed,
(b) means (11) for providing a raw synthesis gas stream to be purified, means (10) for cooling the raw synthesis gas stream through indirect heat exchange with a cooling medium, means (12) for introducing the cooled raw synthesis gas stream to the at least one sulfur components absorption zone (20),
(c) means for contacting the cooled raw synthesis gas stream in the at least one sulfur components absorption zone (20) with a first scrubbing medium stream, means for discharging a synthesis gas stream depleted in sulfur components from the at least one sulfur components absorption zone, means (24) for discharging a scrubbing medium stream enriched in sulfur components from the at least one sulfur components absorption zone, means for introducing the synthesis gas stream depleted in sulfur components to the at least one carbon dioxide absorption zone,
(d) means for contacting the synthesis gas stream depleted in sulfur components in the at least one carbon dioxide absorption zone (20) with a second scrubbing medium stream, means (29) for discharging a synthesis gas stream depleted in carbon dioxide from the at least one carbon dioxide absorption zone (20) as pure synthesis gas, means (22) for discharging a scrubbing medium stream enriched in carbon dioxide from the at least one carbon dioxide absorption zone,
(e) a first flash regeneration apparatus (30), means (24) for supplying the scrubbing medium stream enriched in sulfur components to the first flash regeneration apparatus (30) and introducing it thereto, means (33, 34) for discharging a third scrubbing medium stream (33) containing sulfur components and depleted in carbon dioxide by flashing and at least one first carbon dioxide-containing gas stream (34) from the first flash regeneration apparatus,
(f) a multistage second flash regeneration apparatus (30) configured such that the pressures in the individual flash stages (30A, 30B, 30C) decrease in the flow direction of the scrubbing medium stream, means (22) for discharging a scrubbing medium stream enriched in carbon dioxide from the absorption apparatus (20), means (22) for introducing it to the multistage second flash regeneration apparatus (30), means (32, 36) for discharging a fourth scrubbing medium stream (32) depleted in carbon dioxide through multistage flashing and at least one second carbon dioxide-containing gas stream (36) from the second flash regeneration apparatus (30),
(g) a reabsorber column (40), means (32, 33) for introducing the third (33) and the fourth (32) scrubbing medium stream to the reabsorber column (40), means (70, 71) for supplying a first portion (71) of a stripping gas to the reabsorber column (40), means (42) for discharging a gaseous top product stream comprising carbon dioxide and stripping gas from the reabsorber column (40), a hot regeneration apparatus (50), means (44) for discharging a liquid sump product stream from the reabsorber column (50) and means (46, 48, 28) for supplying the sump product stream to a hot regeneration apparatus (50) and introducing it thereto, wherein the reabsorber column (40) is configured to allow stripping of the third scrubbing medium stream or of the third and the fourth scrubbing medium stream in the reabsorber column with a first portion (71) of a stripping gas,
(h) means (52) for discharging a product gas stream enriched in sulfur components and a fifth scrubbing medium stream depleted in sulfur components from the hot regeneration apparatus (50), means (26, 54, 56, 58) for recycling at least a portion of the fifth scrubbing medium stream after cooling as a constituent of the first and/or second scrubbing medium stream to the absorption apparatus (20),
**characterized in that**
(i) said plant comprises means (70, 72, 38) which allow a second portion of the stripping gas to be introduced to the multistage second flash regeneration apparatus (30) and an offgas stream (38) comprising carbon dioxide and stripping gas to be discharged therefrom.

10. Plant according to Claim 9, **characterized in that** said plant further comprises means (72) which allow the second portion of the stripping gas to be introduced to the furthest downstream flash stage (30C) of the multistage second flash regeneration apparatus (30).

11. Plant according to Claim 9 of 10, **characterized in that** said plant further comprises means (38, 42) which allow the top product stream (42) discharged (38) from the last flash stage (30C) of the multistage second flash regeneration apparatus (30) and/or the top product stream (42) discharged from the reabsorber column (40), both of which contain carbon dioxide and stripping gas, to be used as a constituent of the cooling medium.

12. Plant according to any of the preceding claims, **characterized in that** said plant further comprises means (34) which allow the carbon dioxide-containing gas stream (34) discharged from the first flash stage (30A) of the multistage second flash regeneration apparatus (30) to be recycled to the absorption apparatus (20).

13. Plant according to any of the preceding claims, **characterized in that** the second flash regeneration apparatus (30) comprises at least three flash stages (30A, 30B, 30C), wherein said plant comprises means (36) which allow a carbon dioxide-containing gas stream (36) to be discharged as a carbon dioxide product stream from a middle flash stage.

14. Plant according to any of the preceding claims, **characterized in that** said plant further comprises means (34, 36, 38) which allow all gas streams (34, 36, 38) discharged from the multistage second flash regeneration apparatus (30) to be used as constituents of the cooling medium.

## Revendications

1. Procédé de purification d'un gaz de synthèse brut contenant de l'hydrogène et du monoxyde de carbone en tant que composants cibles et du dioxyde de carbone et des composants sulfurés en tant que contaminants, par lavage du gaz avec un agent de lavage à effet physique, liquide, sélectif pour le dioxyde de carbone et les composants sulfurés, comprenant les étapes suivantes :
(a) fourniture d'un dispositif d'absorption (20), comprenant au moins deux zones d'absorption, dont chacune est équipée d'éléments augmentant l'aire spécifique, tels que des plateaux, des garnissages structurés et des corps de remplissage, d'abord au moins une zone d'absorption des composants sulfurés, et ensuite au moins une zone d'absorption de dioxyde de carbone, étant traversés dans la direction de l'écoulement du gaz de synthèse brut,
(b) fourniture d'un courant de gaz de synthèse brut (11) à purifier, refroidissement du courant de gaz de synthèse brut par échange de chaleur indirect (10) à l'aide d'un agent de refroidissement, introduction (12) du courant de gaz de synthèse brut refroidi dans l'au moins une zone d'absorption des composants sulfurés (20),
(c) mise en contact du courant de gaz de synthèse brut refroidi dans l'au moins une zone d'absorption des composants sulfurés (20), dans les conditions d'une absorption des composants sulfurés avec un premier courant d'agent de lavage, évacuation d'un courant de gaz de synthèse appauvri en composants sulfurés de l'au moins une zone d'absorption des composants sulfurés (20), évacuation d'un courant d'agent de lavage enrichi en composants sulfurés de l'au moins une zone d'absorption des composants sulfurés, introduction du courant de gaz de synthèse appauvri en composants sulfurés dans l'au moins une zone d'absorption du dioxyde de carbone (20),
(d) mise en contact du courant de gaz de synthèse appauvri en composants sulfurés dans l'au moins une zone d'absorption du dioxyde de carbone (20) dans les conditions d'absorption du dioxyde de carbone avec un deuxième courant d'agent de lavage, évacuation d'un courant de gaz de synthèse appauvri en dioxyde de carbone de l'au moins une zone d'absorption du dioxyde de carbone (20) sous forme de gaz de synthèse pur (29), évacuation d'un courant d'agent de lavage enrichi en dioxyde de carbone (22) de l'au moins une zone d'absorption du dioxyde de carbone (20),
(e) amenée (24) du courant d'agent de lavage enrichi en composants sulfurés à un premier dispositif de régénération éclair (30) et introduction dans ce dernier, évacuation d'un troisième courant d'agent de lavage (33), appauvri en dioxyde de carbone par régénération éclair, contenant des composants sulfurés, et d'au moins un courant de gaz contenant du dioxyde de carbone (34), du premier dispositif de régénération éclair (30),
(f) évacuation d'un courant d'agent de lavage enrichi en dioxyde de carbone (22) du dispositif d'absorption (20), son introduction dans un deuxième dispositif de régénération éclair à plusieurs étages (30), les pressions dans les différents étages (30A, 30B, 30C) diminuant dans la direction de l'écoulement du courant d'agent de lavage, évacuation d'un quatrième courant d'agent de lavage, appauvri en dioxyde de carbone par régénération éclair à plusieurs étages, et d'au moins un deuxième courant de gaz contenant du dioxyde de carbone, du deuxième dispositif de régénération éclair (30),
(g) introduction du troisième et du quatrième (32) courants d'agent de lavage dans une colonne de réabsorption (40), extraction du troisième courant d'agent de lavage ou du troisième et du quatrième courants d'agent de lavage dans la colonne de réabsorption (40) avec une première partie d'un gaz d'extraction (70, 71), évacuation d'un courant de produit de tête gazeux (42), comprenant du dioxyde de carbone et du gaz d'extraction, de la colonne de réabsorption (40), évacuation d'un courant de produit de fond liquide (44) de la colonne de réabsorption (40), amenée du courant de produit de fond (44) à un dispositif de régénération à chaud (50) et introduction dans ce dernier,
(h) régénération à chaud du courant de produit de fond (44) de la colonne de réabsorption (40) dans le dispositif de régénération à chaud (50) dans les conditions d'une régénération à chaud, évacuation d'un courant de gaz produit enrichi en composants sulfurés et d'un cinquième courant d'agent de lavage appauvri en composants sulfurés (52) du dispositif de régénération à chaud (50), renvoi d'au moins une partie du cinquième courant d'agent de lavage (52), après refroidissement, comme constituant du premier et/ou du deuxième courants d'agent de lavage, dans le dispositif d'absorption (20),
**caractérisé en ce que**
(i) une deuxième partie du gaz d'extraction (72) est introduite dans le deuxième dispositif de régénération éclair à plusieurs étages (30), et un effluent gazeux (38), comprenant du dioxyde de carbone et du gaz d'extraction, en est évacué.

2. Procédé selon la revendication 1, **caractérisé en ce que** la deuxième partie du gaz d'extraction (72) est introduite dans le dernier étage de régénération éclair (30C) dans la direction de l'amont du deuxième dispositif de régénération éclair à plusieurs étages (30) .

3. Procédé selon la revendication 1 ou 2, **caractérisé en ce que** le courant de produit de tête (42), évacué (38) du dernier étage (30C) du deuxième dispositif de régénération éclair à plusieurs étages (30) et/ou évacué de la colonne de réabsorption, qui chacun contiennent du dioxyde de carbone et du gaz d'extraction, est utilisé comme constituant de l'agent de refroidissement.

4. Procédé selon l'une des revendications précédentes, **caractérisé en ce que** le courant gazeux (34) contenant du dioxyde de carbone, évacué du premier étage (30A) du deuxième dispositif de régénération éclair à plusieurs étages (30), est renvoyé au dispositif d'absorption (20).

5. Procédé selon l'une des revendications précédentes, **caractérisé en ce que** le deuxième dispositif de régénération éclair (30) comprend au moins trois étages (30A, 30B, 30C), un courant gazeux (36) contenant du dioxyde de carbone étant évacué sous forme d'un courant de produit dioxyde de carbone d'un étage éclair moyen (30B).

6. Procédé selon l'une des revendications précédentes, **caractérisé en ce que** tous les courants gazeux (34, 36, 38) évacués du deuxième dispositif de régénération éclair à plusieurs étages (30) sont utilisés comme constituants de l'agent de refroidissement.

7. Procédé selon l'une des revendications précédentes, **caractérisé en ce que** le deuxième dispositif de régénération éclair (30) comprend au moins trois étages (30A, 30B, 30C), la pression dans le premier étage (30A) étant comprise entre 5 et 30 bar(a), la pression dans un étage central (30B) étant comprise entre 2,5 et 5,0 bar(a) et la pression dans le dernier étage (30C) étant comprise entre 1,5 et 2,5 bar(a).

8. Procédé selon l'une des revendications précédentes, **caractérisé en ce que** la deuxième partie du gaz d'extraction (72) représente au plus 20 % en volume, de préférence au plus 10 % en volume, tout spécialement au plus 5 % en volume de la totalité du gaz d'extraction (70) utilisé dans le procédé.

9. Installation destinée à la purification d'un gaz de synthèse brut contenant de l'hydrogène et du monoxyde de carbone en tant que composants cibles et du dioxyde de carbone et des composants sulfurés en tant que composants contaminants, par lavage par un gaz avec un agent de lavage à effet physique, liquide, sélectif pour le dioxyde de carbone et les composants sulfurés, comprenant les composants et constituants suivants, en liaison fluidique les uns avec les autres :
(a) un dispositif d'absorption (20), comprenant au moins deux zones d'absorption, dont chacune est équipée d'éléments augmentant l'aire spécifique tels que des plateaux, des garnissages structurés ou des corps de remplissage, de telle sorte que, dans la direction de l'écoulement du gaz de synthèse brut, d'abord au moins une première zone d'absorption (zone d'absorption des composants sulfurés), et ensuite au moins une deuxième zone d'absorption (zone d'absorption du dioxyde de carbone) sont traversées,
(b) des moyens (11) pour fournir un courant de gaz de synthèse à purifier, des moyens (10) pour refroidir le courant de gaz de synthèse brut par échange de chaleur indirect avec un agent de refroidissement, des moyens (12) pour introduire le courant de gaz de synthèse brut refroidi dans l'au moins une zone d'absorption des composants sulfurés (20),
(c) des moyens pour mettre en contact le courant de gaz de synthèse brut refroidi dans l'au moins une zone d'absorption des composants sulfurés (20) avec un premier courant d'agent de lavage, des moyens pour évacuer un courant de gaz de synthèse appauvri en composants sulfurés de l'au moins une zone d'absorption des composants sulfurés, des moyens (24) pour évacuer un courant d'agent de lavage enrichi en composants sulfurés de l'au moins une zone d'absorption des composants sulfurés, des moyens pour introduire le courant de gaz de synthèse appauvri en composants sulfurés dans l'au moins une zone d'absorption du dioxyde de carbone,
(d) des moyens pour mettre en contact le courant de gaz de synthèse appauvri en composants sulfurés dans l'au moins une zone d'absorption de dioxyde de carbone (20) avec un deuxième courant d'agent de lavage, des moyens (29) pour évacuer un courant de gaz de synthèse appauvri en dioxyde de carbone de l'au moins une zone d'absorption du dioxyde de carbone (20) sous forme de gaz de synthèse pur, des moyens (20) pour évacuer un courant d'agent de lavage enrichi en dioxyde de carbone de l'au moins une zone d'absorption du dioxyde de carbone,
(e) un premier dispositif de régénération éclair (30), des moyens (24) pour amener le courant d'agent de lavage enrichi en composants sulfurés au premier dispositif de régénération éclair (30) et introduction dans ce dernier, des moyens (33, 34) pour évacuer un troisième courant d'agent de lavage (33), appauvri par régénération éclair en dioxyde de carbone, contenant des composants sulfurés, et d'au moins un courant gazeux (34) contenant du dioxyde de carbone, du premier dispositif de régénération éclair,
(f) un deuxième dispositif de régénération éclair à plusieurs étages (30), conçu de telle sorte que les pressions, dans les différents étages de régénération éclair (30A, 30B, 30C), diminuent dans la direction de l'écoulement du courant d'agent de lavage, des moyens (22) pour évacuer un courant d'agent de lavage enrichi en dioxyde de carbone du dispositif d'absorption (20), des moyens (22) pour introduire ce dernier dans le deuxième dispositif de régénération éclair à plusieurs étages (30), des moyens (32, 36) pour évacuer un quatrième courant d'agent de lavage (32) appauvri en dioxyde de carbone par régénération éclair à plusieurs étages et d'au moins un deuxième courant gazeux (36) contenant du dioxyde de carbone, du deuxième dispositif de régénération éclair (30),
(g) une colonne de réabsorption (40), des moyens (32, 33) pour introduire le troisième (33) et le quatrième (32) courants d'agent de lavage dans la colonne de réabsorption (40), des moyens (70, 71) pour amener une première partie (71) d'un gaz d'extraction à la colonne de réabsorption (40), des moyens (42) pour évacuer un courant de produit de tête gazeux, comprenant du dioxyde de carbone et du gaz d'extraction, de la colonne de réabsorption (40), un dispositif de régénération à chaud (50), des moyens (44) pour évacuer un courant de produit de fond liquide de la colonne de réabsorption (40) et des moyens (46, 48, 28) pour amener le courant de produit de fond à un dispositif de régénération à chaud (50) et introduction dans ce dernier, la colonne de réabsorption (40) étant conçue de façon à rendre possible une extraction du troisième courant d'agent de lavage ou du troisième et du quatrième courants d'agent de lavage dans la colonne de réabsorption avec une première partie (71) d'un gaz d'extraction,
(h) des moyens (52) pour évacuer un courant de gaz produit enrichi en composants sulfurés et d'un cinquième courant d'agent de lavage appauvri en composants sulfurés du dispositif de régénération à chaud (50), des moyens (26, 54, 56, 58) pour renvoyer au moins une partie du cinquième courant d'agent de lavage, après refroidissement, comme constituant du premier et/ou du deuxième courants d'agent de lavage, dans le dispositif d'absorption (20),
**caractérisée en ce que**
(i) elle comprend des moyens (70, 72, 38), qui permettent d'introduire une deuxième partie du gaz d'extraction dans le deuxième dispositif de régénération éclair à plusieurs étages (30), et d'évacuer de celui-ci un effluent gazeux (38) comprenant du dioxyde de carbone et du gaz d'extraction.

10. Installation selon la revendication 9, **caractérisée en ce qu'**elle comprend en outre des moyens (72) qui permettent d'introduire la deuxième partie du gaz d'extraction dans le dernier étage (30C), dans la direction de l'amont, du deuxième dispositif de régénération éclair à plusieurs étages (30).

11. Installation selon la revendication 9 ou 10, **caractérisée en ce qu'**elle comprend en outre des moyens (38, 42), qui permettent d'utiliser comme constituant de l'agent de refroidissement le courant de produit de tête (42) évacué (38) du deuxième dispositif de régénération éclair à plusieurs étages (30) et/ou évacué de la colonne de réabsorption (40), contenant chacun du dioxyde de carbone et du gaz d'extraction.

12. Installation selon l'une des revendications précédentes, **caractérisée en ce qu'**elle comprend en outre des moyens (34) qui permettent de renvoyer au dispositif d'absorption (20) le courant gazeux (34) contenant du dioxyde de carbone, évacué du premier étage (30A) du deuxième dispositif de régénération éclair à plusieurs étages (30).

13. Installation selon l'une des revendications précédentes, **caractérisée en ce que** le deuxième dispositif de régénération éclair (30) comprend au moins trois étages (30A, 30B, 30C), l'installation comprenant des moyens (36) qui permettent d'évacuer de l'étage central de régénération éclair un courant gazeux (36) contenant du dioxyde de carbone, sous forme d'un courant produit dioxyde de carbone.

14. Installation selon l'une des revendications précédentes, **caractérisée en ce qu'**elle comprend en outre des moyens (34, 36, 38), qui permettent d'utiliser comme constituants de l'agent de refroidissement tous les courants gazeux (34, 36, 38) évacués du deuxième dispositif de régénération éclair à plusieurs étages (30).
